(19) Europäisches Patentamt
European Patent Office
Office européen des brevets

(11) Veröffentlichungsnummer: **0 028 402**
**B1**

(12) **EUROPÄISCHE PATENTSCHRIFT**

(45) Veröffentlichungstag der Patentschrift: **27.04.83**

(51) Int. Cl.³: **C 08 G 59/16,** C 09 D 3/58, C 09 D 5/40, C 25 D 13/06

(21) Anmeldenummer: **80106670.5**

(22) Anmeldetag: **30.10.80**

(54) **Verfahren zur Herstellung von wasserverdünnbaren, Oxazolidingruppen tragenden Epoxidharzestern, daraus hergestellte Überzugsmittel und deren Verwendung als kathodisch abscheidbare Lacke.**

(30) Priorität: **05.11.79 AT 7082/79**
**25.04.80 AT 2224/80**
**25.04.80 AT 2225/80**

(43) Veröffentlichungstag der Anmeldung:
**13.05.81 Patentblatt 81/19**

(45) Bekanntmachung des Hinweises auf die Patenterteilung:
**27.04.83 Patentblatt 83/17**

(84) Benannte Vertragsstaaten:
**BE CH DE FR GB IT LI NL SE**

(56) Entgegenhaltungen:
**keine**

(73) Patentinhaber: **VIANOVA KUNSTHARZ AKTIENGESELLSCHAFT, Postfach 191 Leechgasse 21, A-8011 Graz (AT)**

(72) Erfinder: **Leitner, Wolfgang, Dr., Niesenbergergasse 77, A-8010 Graz (AT)**
Erfinder: **Pampouchidis, Georg, Dr., Obere Teichstrasse 31, A-8010 Graz (AT)**
Erfinder: **Bleikolm, Anton, Dr., Obere Teichstrasse 38c, A-8010 Graz (AT)**

(74) Vertreter: **Pitter, Robert, Dr. et al, Leechgasse 21, A-8010 Graz (AT)**

**EP 0 028 402 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verfahren zur Herstellung von wasserverdünnbaren, Oxazolidingruppen tragenden Epoxidharzestern, daraus hergestellte Überzugsmittel und deren Verwendung als kathodisch abscheidbare Lacke

Die Erfindung betrifft ein Verfahren zur Herstellung von wasserverdünnbaren, Oxazolidingruppen tragenden Epoxidharzestern, welche insbesondere zur Formulierung kathodisch abscheidbarer Überzugsmittel geeignet sind.

Aus den AT-PSen 342 169, 348 635, 343 770, 343 771, 346 989 ist es bekannt, die für die kathodische Abscheidung notwendigen basischen Gruppen durch Zwischenprodukte, welche eine freie Isocyanatgruppe und mindestens eine basische Stickstoffgruppierung tragen, in Hydroxylgruppen tragende Polymermoleküle einzuführen. Solche Monoisocyanatverbindungen werden gemäss diesem Stand der Technik durch Umsetzung von Di- oder Polyisocyanaten mit der entsprechenden Menge an Dialkylalkanolaminen hergestellt.

Beim Einbrennen der elektrophoretisch abgeschiedenen Filme werden die genannten Amine zum Teil abgespalten und stellen einen beträchtlichen Teil der Einbrennverluste dar, welche aus der Abluft der Einbrennanlagen entfernt werden müssen.

Das gleiche Problem tritt auch bei den Produkten auf, wie sie z.B. in der DE-OS 20 57 799 oder den DE-ASen 22 52 536 und 22 65 195 beschrieben werden, in denen kathodisch abgeschiedene Überzugsmittel nach Abspaltung der Blockierungsmittel aus blockierten Isocyanaten unter Urethanbildung vernetzt werden.

Aus der GB-PS 1 391 922 sind Umsetzungsprodukte von Epoxidharzen mit Reaktionsprodukten aus tertiären Hydroxyaminen mit Dicarbonsäureanhydriden bekannt. Bei diesen Produkten ist es nötig, dass ein Teil der Epoxidgruppen bei der Reaktion intakt bleibt, damit das System über vernetzungsfähige Gruppen verfügt. Wie bekannt, sind diese Gruppen in der wässrigen Lösung, wie sie im Elektrotauchbad vorliegt, nur kurze Zeit beständig, sodass diese Bäder, besonders in Gegenwart der notwendigen Katalysatoren, nach kurzer Betriebsdauer unbrauchbar werden.

Aufgabe der vorliegenden Erfindung war es, Bindemittel für die kathodische Elektrotauchlackierung zur Verfügung zu stellen, welche in ihren Beständigkeitseigenschaften den Anforderungen der Verbraucher, insbesondere der Autoindustrie entsprechen sowie überdies verringerte Einbrennverluste aufweisen und eine Herabsetzung der für eine gute Vernetzung notwendigen Einbrenntemperatur gestatten.

Es wurde nun gefunden, dass diese Forderungen erfüllt werden können, wenn man zur Einführung der basischen Gruppierungen in Epoxidgruppen tragende Polymermoleküle N-2-Hydroxyalkyloxazolidin-Halbester von Dicarbonsäuren heranzieht.

Die vorliegende Erfindung betrifft daher ein Verfahren zur Herstellung von nach vollständiger oder partieller Neutralisation mit anorganischen und/oder organischen Säuren wasserverdünnbaren Bindemitteln durch Umsetzung von Epoxidharzen mit Reaktionsprodukten aus tertiären Hydroxyaminen mit Dicarbonsäuren, welches dadurch gekennzeichnet ist, dass man die Epoxidgruppen einer harzartigen Verbindung mit mindestens zwei 1,2-Epoxidgruppen pro Molekül und einem Epoxidäquivalent von mind. 160 mit einem Halbester aus einer aliphatischen, cycloaliphatischen oder aromatischen Dicarbonsäure und einem N-2-Hydroxyalkyloxazolidin, welcher die allgemeine Formel

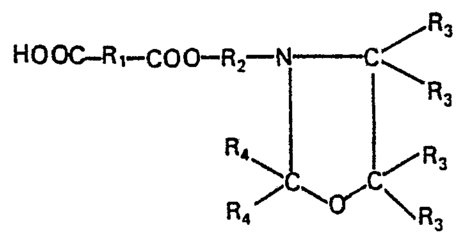

aufweist und

wobei $R_1$ einen gesättigten oder ungesättigten, aliphatischen, cycloaliphatischen oder aromatischen Kohlenwasserstoffrest

$R_2$ einen geradkettigen oder verzweigten Alkylenrest

$R_3$ ein Wasserstoffatom oder einen Alkylrest und

$R_4$ ein Wasserstoffatom oder einen Alkylrest mit bis zu 6 C-Atomen bedeutet,

gegebenenfalls zusammen mit weiteren Verbindungen zur Einführung zusätzlicher Vernetzungsreaktionen und/oder anderen, den Filmaufbau und/oder die Filmoberfläche beeinflussenden Funktionen in Gegenwart inerter Lösungsmittel bei 60 bis 80°C volständig umsetzt, wobei die Menge des Oxazolidinhalbesters so gewählt wird, dass das epoxidgruppenfreie Endprodukt eine theoretische Aminzahl von mindestens 35, vorzugsweise von 50 bis 140 mg KOH/g aufweist.

Durch diese Oxazolidinhalbester werden in das Polymer in einer Stufe sowohl die basischen Gruppierungen sowie die für eine Vernetzung des Films notwendigen Gruppen eingeführt. Es ist daher auch nicht nötig, einen Teil der Epoxidgruppen unreagiert zu erhalten, sondern es können über diese Gruppen weitere stabile Vernetzungsfunktionen und/oder andere den Filmaufbau oder die Filmoberfläche beeinflussende Funktionen eingebaut werden.

Überraschenderweise zeigt sich weiterhin, dass ausschliesslich oder anteilig mit N-2-Hydroxyalkyloxazolidinen löslich gemachte Harze bereits bei niedrigen Neutralisationsgraden gut wasserlöslich sind. Ein weiterer Vorteil gegenüber dem Stand der Technik liegt in der Möglichkeit der Herabsetzung der Einbrenntemperatur und/oder der Einbrennzeit, da die erfindungsgemässen Bindemittel bereits ab 130°C eine gute Vernetzung aufweisen. Optimale Beständigkeitseigenschaften werden bei Einbrennbedingungen

von 10–30 Minuten bei 140–180°C erzielt. Hervorzuheben sind die gegenüber Produkten, bei denen die Einführung der funktionellen Gruppen oder die Vernetzung über Urethanverbindungen erfolgt, niedrigen Einbrennverluste der Bindemittel, welche auch nach 30 Minuten bei 180°C unter 7% (bezogen auf den bei 100°C getrockneten Film) liegen. Die eingebrannten Filme zeigen neben guter Lösungsmittelbeständigkeit ausgezeichnete Korrosionsschutzeigenschaften.

Es ist anzunehmen, dass diese überraschenden Effekte dadurch erreicht werden, dass der Oxazolidinring unter der Einwirkung von Wasser im sauren Medium gespalten wird, wobei folgender Reaktionsablauf angenommen werden kann:

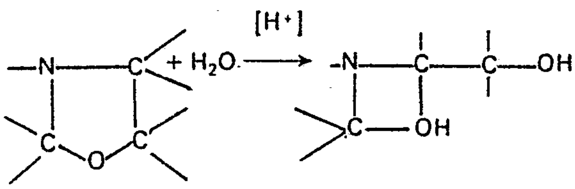


Aufgrund der Ergebnisse mit den erfindungsgemässen Produkten scheint die Annahme gerechtfertigt, dass die vorteilhaften Eigenschaften zu einem wesentlichen Teil auf die Reaktivität der gegebenenfalls substituierten N-Methylolgruppen zurückzuführen sind. Ausserdem unterstützen die entstehenden Hydroxylgruppen die Wasserverträglichkeit der Harze, wodurch die zur Erzielung der Wasserverdünnbarkeit notwendige Säuremenge reduziert werden kann. Bei der Härtung werden diese Hydroxylgruppen teilweise verbraucht, so dass die Wasserbeständigkeit des eingebrannten Films nicht durch den hydrophilen Charakter des Harzes beeinträchtigt wird.

Die Herstellung der N-2-Hydroxyalkyloxazolidine erfolgt in bekannter Weise durch Umsetzung von Dialkanolaminen und Aldehyden oder Ketonen bei Temperaturen bis max. 130°C unter Abspaltung von Wasser. Als Dialkanolamine werden dabei vor allem das Diäthanolamin und das Diisopropanolamin eingesetzt. Gegebenenfalls können auch Dialkanolamine mit längeren Alkylresten verwendet werden. Als Carbonylkomponente wird vorzugsweise Formaldehyd eingesetzt, doch können auch höhere Aldehyde oder Ketone mit bis zu 6 C-Atomen pro vorhandenem Alkylrest verwendet werden.

Die zur Umsetzung mit den Epoxidgruppen des Basispolymeren erfindungsgemäss eingesetzten Halbester weisen die folgende allgemeine Formel auf

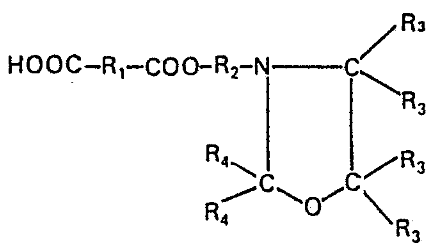

wobei $R_1$ einen gesättigten oder ungesättigten, aliphatischen, cycloaliphatischen oder aromatischen Kohlenwasserstoffrest
$R_2$ einen geradkettigen oder verzweigten Alkylenrest
$R_3$ ein Wasserstoffatom oder einen Alkylrest und
$R_4$ ein Wasserstoffatom oder einen Alkylrest mit bis zu 6 C-Atomen bedeutet.

Die Herstellung dieser Halbester gelingt in einfacher Weise durch Reaktion der N-Hydroxyalkyloxazolidine mit cyclischen Dicarbonsäureanhydriden. Als cyclische Dicarbonsäureanhydride können beispielsweise die Anhydride aromatischer Dicarbonsäuren wie o-Phthalsäureanhydrid, oder Naphthalindicarbonsäureanhydrid eingesetzt werden. Vertreter alicyclischer Dicarbonsäuren, welche geeignete Anhydride bilden, sind z.B. die Tetra- oder Hexahydrophthalsäure, die Endoalkylentetrahydrophthalsäuren, halogensubstituierte Phthalsäuren und analoge Abkömmlinge anderer aromatischer Dicarbonsäuren. Als aliphatische Dicarbonsäuren seien z.B. die Bernsteinsäure und ihre cyclische Anhydride bildenden Homologen, sowie als ungesättigte aliphatische Dicarbonsäuren die Maleinsäure und ihre Halogensubstitutionsprodukte genannt.

Die Umsetzung des Oxazolidins mit dem Dicarbonsäureanhydrid erfolgt in stöchiometrischen Mengenverhältnissen, vorzugsweise in Gegenwart inerter Lösungsmittel, wie Ester, Äther, Ketone oder aromatischen Lösungsmitteln. Durch die basischen Gruppierungen wird die Reaktion beschleunigt und erfolgt sehr schnell auch bei niedrigen Temperaturen. Bei Temperaturen zwischen 40 und 80°C wird normalerweise nach 30 bis 120 Minuten der theoretische Säurewert des Halbesters erreicht. Temperaturen über 80°C sollen bei der Herstellung der Halbester vermieden werden, da in diesem Falle bereits Vernetzungsreaktionen eintreten können, welche zu unbrauchbaren Zwischenprodukten führen.

Die so erhaltenen N-2-Hydroxyalkyloxazolidin-Dicarbonsäurehalbester werden bei 60 bis 80°C mit den 1,2-Epoxidgruppen tragenden Verbindungen umgesetzt. Geeignete als Basisharze verwendbare Verbindungen sind die verschiedenen bekannten Epoxidharze auf Basis von Phenolen, insbesondere von Bisphenol A und Phenolnovolaken, sowie Epoxidharze auf Basis aliphatischer Alkohole und Glycidylgruppen tragende Copolymerisate mit einem Epoxidäquivalent von mind. 160. Zur Gewährleistung einer ausreichenden Funktionalität weisen die erfindungsgemäss eingesetzten Epoxidverbindungen mindestens 2 1,2-Epoxidgruppen pro Molekül auf. Verbindungen dieser Art sind in ausführlicher Weise im «Handbook of Epoxy. Resins» von H. Lee und K. Neville, McGraw-Hill Book Comp., New York, 1967 beschrieben.

Die Mengenverhältnisse zwischen den Komponenten werden so gewählt, dass für das Endprodukt eine theoretische Aminzahl von mindestens 35, vorzugsweise von 50–140 mg KOH/g resultiert.

In den meisten Fällen werden bei dieser Umsetzung nicht alle Epoxidgruppen verbraucht, sodass sich hier eine Möglichkeit zur Modifikation ergibt, durch welche die Eigenschaften der Bindemittel in weitem Rahmen den Anforderungen der Praxis angepasst werden können. Die im nachfolgenden aufgezählten Möglichkeiten können jeweils für sich allein oder auch in Kombination zur Modifikation der Oxazolidingruppen tragenden Epoxidharzester herangezogen werden:

1. Die nicht zur Einführung der Oxazolidinhalbester verbrauchten Epoxidgruppen können mit gesättigten und/oder ungesättigten Carbonsäuren umgesetzt werden.

Während durch längerkettige Monocarbonsäuren, wie dem Fachmann bekannt ist, besonders die Oberflächeneigenschaften beeinflusst werden, kann durch den Einsatz von α,β-äthylenisch ungesättigten Säuren die Vernetzungsdichte durch zusätzliche thermische Polymerisation erhöht werden. Der Einsatz von ungesättigten Säuren ist vor allem bei Harzen zu empfehlen, die zu Überzugsmitteln verarbeitet werden, welche bei Temperaturen ab 160°C eingebrannt werden sollen. Als α,β-äthylenisch ungesättigte Monocarbonsäuren können Acrylsäure, Methacrylsäure oder entsprechende Halbester aus Dicarbonsäure und Hydroxy(meth)acrylaten eingesetzt werden. Als längerkettige Monocarbonsäuren können z.B. gesättigte oder ungesättigte Ölfettsäuren Verwendung finden.

Wird als Monocarbonsäure ein Halbester einer Dicarbonsäure und eines Hydroxyalkyl(meth)acrylats verwendet, kann dieser auch in einem Eintopfverfahren gleichzeitig mit dem Oxazolidinhalbester hergestellt werden. Dieses Verfahren ist besonders vorteilhaft, da durch den basischen Charakter des Oxazolidins die Reaktion zwischen Säureanhydrid und Hydroxyalkyl(meth)acrylat katalysiert wird, sodass auch bei niedrigen Temperaturen (40–80°C) rasch praktisch vollständiger Umsatz erreicht wird.

Beim Einsatz von Dicarbonsäuren, wie Bernsteinsäure und deren Homologe, Maleinsäure, Phthalsäuren u.a. erfolgt eine zusätzliche Verknüpfung der eingesetzten Epoxidharze zu Einheiten mit höherem Molekulargewicht, was sich sehr günstig auf die Eigenschaften des Harzes und der damit hergestellten Überzüge auswirkt. Überdies bewirken sie in Epoxidharzmischungen eine Homogenisierung der verschiedenen eingesetzten Epoxidharze und führen dadurch ebenfalls zu einer Verbesserung der Harzeigenschaften. Gegebenenfalls können auch in diesem Fall Monocarbonsäuren zusätzlich eingesetzt werden. Beim Einsatz von Dicarbonsäuren können zur Viskositätsregulierung auch geringe Mengen von Monoepoxidverbindungen eingesetzt werden.

2. Eine weitere Möglichkeit zur Modifizierung besteht in der Reaktion der nach der Umsetzung mit dem Oxazolidinhalbester verbleibenden Epoxidgruppen mit primären und/oder sekundären Aminen.

Werden die Oxazolidinhalbester als einzige basische Komponente in kathodisch abscheidbaren Lacken als Bindemittel eingesetzt, wirkt sich die schwache Basizität der Oxazolidingruppe ungünstig aus. Die Harze sind zwar bereits bei niedrigem Neutralisationsgrad wasserlöslich, doch zeigen die Lösungen einen niedrigen pH-Wert (unter 6, oft unter 5). Dies wird von Anwendern oft als Nachteil empfunden, da ein niedriger pH-Wert als Grund für verstärkte Korrosion der mit der Harzlösung in Berührung kommenden Metallteile der Beschichtungsanlage angenommen wird.

Dieser Nachteil kann durch den zusätzlichen Einbau von primären und/oder sekundären Aminen beseitigt werden, ohne dass die durch die Oxazolidingruppen erzielten Vorteile verloren gehen.

Diese Modifikation ist im wesentlichen dadurch gekennzeichnet, dass man 30 bis 99,5, vorzugsweise 40 bis 60 Mol-% der Epoxidgruppen mit einem Oxazolidinhalbester, 0,5 bis 70, vorzugsweise 5 bis 35 Mol-% mit einem primären und/oder sekundären Amin und den gegebenenfalls verbleibenden Rest der Epoxidgruppen mit gesättigten und/oder ungesättigten Carbonsäuren umsetzt.

Eine bevorzugte Ausführungsform liegt in der Verwendung von primären Aminen, insbesondere in Kombination mit sekundären Aminen oder in Form von primär-tertiären Aminen. Die primäre Aminogruppe kann mit 2 Epoxidgruppen reagieren, sodass es zu einer Verknüpfung zweier Epoxidharzmoleküle kommt. Da die bei dieser Reaktion entstehende Stickstoffgruppierung nur schwach basisch ist, muss zur Erhöhung des pH-Wertes der wässrigen Harzlösung entweder zusätzlich sekundäres Amin eingesetzt werden, oder man verwendet anstelle des primären Amins ein primär-tertiäres Diamin. Die primäre Aminogruppe dient dabei zur Verknüpfung der Epoxidharzmoleküle, während die mit Epoxidgruppen nicht reaktive tertiäre Aminogruppen die stark basische Komponente darstellt. Der Einsatz primärer Amine erweist sich vor allem bei Verwendung von Mischungen verschiedener Epoxidverbindungen als sehr günstig, da das bifunktionelle Amin eine gewisse Homogenisierung der heterogenen Mischung bewirkt. Auch beim Einsatz primärer Amine können zur Viskositätsregulierung geringe Mengen von Monoepoxidverbindungen eingesetzt werden. Bei Verwendung von sekundären Aminen, die in bezug auf Epoxidgruppen monofunktionell sind, kommt es zu keinem wesentlichen Viskositätsanstieg; es reagiert ein Molekül Amin mit einer Epoxidgruppe.

Im allgemeinen genügt es bereits, einen relativ geringen Teil der anfangs vorhandenen Epoxidgruppen mit dem Amin umzusetzen, um den pH-Wert der wässrigen Lösung um 1 bis 1,5 Einheiten ansteigen zu lassen. Unter der Voraussetzung, dass der Anteil der mit dem Oxazolidinhalbester umgesetzten Epoxidgruppen nicht unter 30 Mol-% liegt, kann ein Anteil von 0,5 bis 70 Mol-% mit dem Amin umgesetzt werden. Vorzugsweise

beträgt der Anteil des Oxazolidinhalbesters 40 bis 60 Mol-%, der Anteil der Amine 5 bis 35 Mol-%, bezogen auf die zur Verfügung stehenden Epoxidgruppen.

Als primäre Amine können Monoalkylamine vom Typ R-$NH_2$ eingesetzt werden, wobei R einen aliphatischen, cycloaliphatischen oder aromatischen Rest darstellt, der noch gegenüber Epoxidgruppen inerte funktionelle Gruppen, wie z.B. tertiäre Aminogruppen, enthalten kann. Beispiele für primäre Amine dieses Typs sind Monoalkylamine, wie Monoäthylamin, Monopropylamin, Monobutylamin und deren weitere Homologe und Isomere; Monocycloalkylamine, wie Cyclohexylamin; aromatische Monoamine, wie Anilin und dessen Homologe. Als primäre Amine, welche zusätzlich noch eine tertiäre Aminogruppe tragen, werden vorzugsweise N,N-Dialkylaminoalkylamine wie Dimethylaminopropylamin, Diäthylaminopropylamin, Diäthylaminobutylamin u.ä. eingesetzt.

Als sekundäre Amine kommen Amine vom Typ $R_1$-NH-$R_2$ in Frage, wobei $R_1$ und $R_2$ auch miteinander zu 5- bzw. 6-Ringen verbunden sein können. Beispielsweise seien hier die entsprechenden Dialkylamine, wie Diäthylamin, die Dipropylamine, Dibutylamine usw. oder Morpholin genannt.

Die Amine können mit den Epoxidverbindungen entweder anschliessend an die Umsetzung mit den Oxazolidinhalbestern und Carbonsäuren oder auch gleichzeitig reagiert werden. Die Summe der Amin- und Säureäquivalente soll dabei vorzugsweise weitgehend der Zahl der Epoxidäquivalente der eingesetzten Epoxidverbindung entsprechen, so dass ein praktisch epoxidgruppenfreies Endprodukt resultiert. Zur Erzielung einer ausreichenden Wasserverdünnbarkeit müssen die Produkte wie bereits erwähnt, eine Aminzahl von mind. 35, vorzugsweise 50 bis 140 mg KOH/g aufweisen.

3. Eine weitere Möglichkeit zur Erhöhung der Basizität der Oxazolidingruppen tragenden Bindemittel besteht im anteiligen Einbau von Halbestern aus Dicarbonsäuren und tertiären Aminoalkoholen in einer Menge, dass die durch die Oxazolidingruppen erzielten Vorteile nicht verloren gehen.

Diese Modifikation ist im wesentlichen dadurch gekennzeichnet, dass man 30 bis 99, vorzugsweise 40 bis 70 Mol-% der Epoxidgruppen mit einem Oxazolidinhalbester, 1 bis 30, vorzugsweise 5 bis 15 Mol-% mit einem Halbester aus einer Dicarbonsäure und einem tertiären Aminoalkohol und den gegebenenfalls verbleibenden Rest der Epoxidgruppen mit gesättigten und/oder ungesättigten Carbonsäuren umsetzt.

Durch die Mitverwendung der stark basischen Halbester aus Dicarbonsäuren und tertiären Aminoalkoholen wird der pH-Wert der wässrigen Harzlösung in einen günstigeren Bereich angehoben. Da jedoch die hervorragenden Löslichkeitseigenschaften, wie sie durch die Oxazolidinhalbester gegeben sind, bei Verwendung der basischen Halbester wesentlich beeinträchtigt werden, werden nur 1 bis 30 Mol-%, vorzugsweise 5 bis 15 Mol-% der Epoxidgruppen mit dieser Komponente umgesetzt. Bei höheren Anteilen muss der zur Erzielung der Löslichkeit notwendige Neutralisationsgrad erhöht werden, was wieder zur Beeinträchtigung der Materialeigenschaften führt. Der Anteil des Oxazolidinhalbesters liegt dementsprechend bei 30 bis 99 Mol-%, bezogen auf die Epoxidgruppen.

Diese basischen Halbester werden in bekannter Weise durch Umsetzung der Anhydride von aliphatischen, cycloaliphatischen oder aromatischen Dicarbonsäuren mit tertiären Aminoalkoholen vorteilhafterweise in Gegenwart von inerten Lösungsmitteln bei 60 bis 90°C hergestellt. Als Dicarbonsäurekomponente werden vorzugsweise die Anhydride cyclischer Dicarbonsäuren, wie o-Phthalsäureanhydrid, dessen partiell oder vollständig hydrierte oder substituierte Abkömmlinge eingesetzt. Tertiäre Aminoalkohole sind beispielsweise Dimethyl-, Diäthyl-, Dipropyl-, Dibutylaminoäthanole, die entsprechenden Propanole und Butanole.

Eine bevorzugte Ausführungsform dieser Art der Modifikation liegt in der Kombination von Oxazolidinhalbestern, basischen Halbestern und Dicarbonsäuren als Veresterungskomponenten für die Epoxidgruppen der harzartigen Verbindung.

Wird als modifizierende Monocarbonsäure ein Halbester einer Dicarbonsäure und eines Hydroxyalkyl(meth)acrylats verwendet, kann dieser auch in einem Eintopfverfahren gleichzeitig mit dem Oxazolidinhalbester und dem basischen Halbester hergestellt werden. Dieses Verfahren ist besonders vorteilhaft, da durch den basischen Charakter des Oxazolidins die Reaktion zwischen Säureanhydrid und Hydroxyalkyl(meth)acrylat katalysiert wird, sodass auch bei niedrigen Temperaturen (40–80°C) rasch praktisch vollständiger Umsatz erreicht wird.

Die Bindemittel können in bekannter Weise mit Pigmenten vermahlen werden und werden zur Herstellung eines verarbeitungsfertigen Materials nach partieller oder vollständiger Neutralisation mit anorganischen oder organischen Säuren bei pH-Werten zwischen 4 und 7 mit vorzugsweise deionisiertem Wasser bei Verwendung für die Elektrotauchlackierung auf einen Festkörpergehalt zwischen 5 und 20% verdünnt. Die erfindungsgemäss hergestellten Bindemittel zeigen auch bei niedrigen Neutralisationsgraden ausgezeichnete Wasserverdünnbarkeit. Die Verwendung von Zusatz- und Hilfsstoffen sowie die Bedingungen für die Beschichtung eines als Kathode geschalteten Substrats sind dem Fachmann bekannt und bedürfen keiner weiteren Erläuterung.

Die nachfolgenden Beispiele sollen die Erfindung erläutern. Alle Angaben in Teilen oder Prozenten beziehen sich, sofern nicht anders angegeben, auf Gewichtseinheiten.

In den Beispielen werden folgende Abkürzungen benutzt:

THPA Tetrahydrophthalsäureanhydrid
PA o-Phthalsäureanhydrid
MA Maleinsäureanhydrid
HETOX N-2-Hydroxyäthyloxazolidin
HIPOX N-2-Hydroxypropyl-5-methyl-oxazolidin
MIBK Methylisobutylketon
AEGLAC Äthylenglykolmonoäthylätheracetat
AEGL Äthylenglykolmonoäthyläther
EPH Epoxidverbindung
I: Epoxidharz auf Basis Bisphenol A, Epoxidäquivalent ca. 200,
II: Epoxidharz auf Basis Bisphenol A, Epoxidäquivalent ca. 550,
III: Epoxidharz auf Basis eines epoxidierten Phenolnovolaks, Epoxidäquivalent ca. 200
OHE Oxazolidinhalbester
BHE Basische Halbester
MCS Monocarbonsäure:
S 1 Methacrylsäure
S 2 Acrylsäure
S 3 Halbester aus THPA und Hydroxyäthylmethacrylat
S 4 Halbester aus THPA und Hydroxyäthylacrylat
S 5 Halbester aus PA und Hydroxyäthylmethacrylat
S 6 Tallölfettsäure
DCS Dicarbonsäure
S 9 Adipinsäure
S 10 Terephthalsäure
S 11 Bernsteinsäure
BA Butylamin
DMAPA Dimethylaminopropylamin
DEAPA Diäthylaminopropylamin
DEA Diäthylamin
DBA Dibutylamin
ES Essigsäure
AS Ameisensäure
DBZ Doppelbindungszahl = Anzahl der Mole endständige Doppelbindungen pro 1000 g Festharz
AZ Aminzahl mg KOH/g
NEUTR Neutralisation: mMol Säure pro 100 g Festharz
Vmax Aufbruchsspannung in Volt

Alle Mengenangaben in den Tabellen beziehen sich auf Festharz, auch wenn bei der Herstellung von Zwischenprodukten gemäss den dort gemachten Angaben Lösungen anfallen.

Herstellung der Zwischenprodukte
Herstellung der N-Hydroxyalkyloxazolidine:
N-2-Hydroxyäthyloxazolidin (HETOX):
105 g Diäthanolamin und 33 g Paraformaldehyd werden vermischt und nach Zugabe von Toluol als Kreislaufmittel langsam auf 120°C erhitzt. Nach Beendigung der Wasserbildung wird das Kreislaufmittel im Vakuum abgezogen.
N-2-Hydroxypropyl-5-methyl-oxazolidin (HIPOX):
133 g Diisopropanolamin und 33 g Paraformaldehyd werden wie unter 1) umgesetzt.
Herstellung der Oxazolidinhalbester (OHE):
Die N-2-Hydroxyalkyloxazolidin-Dicarbonsäurehalbester werden entsprechend den in Tabelle 1 gemachten Angaben hergestellt. Die Umsetzung erfolgt bis zum theoretischen Säurewert für den Halbester, d.h. bis sich eine konstante Säurezahl einstellt.

Tabelle 1

| | A 1 | A 2 | A 3 | A 4 | A 4 a | A 5 | A 6 |
|---|---|---|---|---|---|---|---|
| THPA | 152 | - | - | 152 | 152 | 152 | - |
| PA | - | 148 | - | - | - | - | 148 |
| MA | - | - | 98 | - | - | - | - |
| HETOX | 117 | 117 | 117 | - | - | 117 | - |
| HIPOX | - | - | - | 145 | 145 | - | 145 |
| MIBK | - | 103 | - | - | 127 | - | - |
| AEGLAC | 115 | - | 82 | - | - | 67 | - |
| Xylol | - | - | - | 127 | - | - | 67 |
| Reaktionstemp. °C | 70 | 70 | 55 | 80 | 75 | 70 | 60 |

Herstellung der basischen Halbester (BHE):
S 7: 152 g Tetrahydrophthalsäureanhydrid und 117 g Diäthylaminoäthanol werden in 115 g AEGLAC gelöst und bei 70°C gehalten bis die Säurezahl konstant ist.
S 8: 152 g Tetrahydrophthalsäureanhydrid und 173 g Dibutylaminoäthanol werden in 139 g MIBK Angelöst und bei 70°C gehalten, bis die Säurezahl konstant ist.

Beispiel 1-13
(Umsetzung von Epoxidverbindungen mit Oxazolidinhalbestern, gegebenenfalls Modifikation mit Monocarbonsäuren.)

Oxazolidinhalbester und Epoxidverbindung sowie die gegebenenfalls eingesetzte Monocarbonsäure werden in AEGLAC gelöst, so dass eine Lösung mit 70% Festkörpergehalt resultiert. Der Ansatz wird auf 75°C erwärmt und bei dieser Temperatur gehalten bis die Säurezahl unter 3 mg KOH/g gesunken ist. Anschliessend wird der Ansatz mit Äthylenglykolmonoäthyläther auf 60% Festkörpergehalt verdünnt (siehe Tabelle 2).

Tabelle 2

| Beispiel | EPH Menge | EPH Typ | OHE (70%ig) Menge | OHE (70%ig) Typ | MCS Menge | MCS Typ | DBZ | Aminzahl mg KOH/g |
|---|---|---|---|---|---|---|---|---|
| 1 | 400 | I | 768 | A 1 | – | – | – | 119 |
| 2 | 300<br>275 | I<br>II | 576 | A 1 | 36 | S 2 | 0,5 | 83 |
| 3 | 400 | I | 384 | A 1 | 282 | S 3 | 1,1 | 59 |
| 4 | 1100 | II | 849 | A 4 | – | – | – | 66 |
| 5 | 200<br>200 | I<br>III | 307 | A 3 | 86 | S 1 | 1,4 | 80 |
| 6 | 400<br>1100 | I<br>II | 961 | A 1 | 423 | S 3 | 0,6 | 54 |
| 7 | 400<br>1100 | I<br>II | 1537 | A 1 | – | – | – | 87 |
| 8 | 700 | III | 1136 | A 2 | 52 | S 1 | 0,4 | 109 |
| 9 | 400<br>400 | I<br>III | 961 | A 1 | 423 | S 3 | 0,8 | 74 |
| 10 | 700 | III | 1529 | A 4 | – | – | – | 114 |
| 11 | 350<br>550 | III<br>II | 849 | A 4 | 54 | S 2 | 0,5 | 72 |
| 12 | 700 | I | 769 | A 1 | 129 | S 1 | 1,1 | 82 |
| 13 | 700<br>300 | I<br>III | 1143 | A 1 | 564 | S 3 | 0,8 | 71 |

Die Prüfung der Bindemittel erfolgt bei der Bestimmung der Härte bzw. der Wasserbeständigkeit durch Beschichtung eines entfetteten, nicht vorbehandelten Stahlblechs mit dem entsprechenden Klarlack. Für den Salzsprühtest werden die entfetteten, nicht vorbehandelten Stahlbleche mit einem pigmentierten Lack (100 Teile Festharz, 16 Teile Al-Silikatpigment, 2 Teile Russ, 2 Teile Bleisilikat) unter den optimalen Spannungsbedingungen, welche eine Trockenfilmdicke von 16–20 µm ergeben, beschichtet und 30 Minuten bei 160°C eingebrannt.

Bei der Prüfung der Wasserfestigkeit (Wasserlagerung bei 40°C) zeigen die Beschichtungen nach 380 Stunden Testzeit keine optisch sichtbaren Veränderungen durch Rostangriff oder Bläschenbildung. Bei den Beispielen 3, 7, 10, 12 und 13 tritt eine leichte Quellung des Films ein, d.h. der Film ist im feuchten Zustand kratzbar.

Beim Salzsprühtest gemäss ASTM-B117-64 zeigen alle Beschichtungen nach einer Testzeit von 340 Stunden einen Kreuzschnittangriff von weniger als 2 mm (Abreissmethode).

Zur Bestimmung des Einbrennverlustes wird der abgeschiedene Klarlackfilm bei 100°C bis zur Gewichtskonstanz getrocknet (resultierendes Gewicht = 100%). Nach dem Einbrennen wird die Gewichtsdifferenz bestimmt.

Die Bedingungen für die Neutralisation, die Beschichtung und das Einbrennen, sowie die Härte und Einbrennverluste sind in Tabelle 3 angegeben.

Tabelle 3

| Beispiel | Neutralisation (1) | (2) | Beschichtung (3) | (4) | Einbrenn-temp. °C (5) | Härte (6) | Einbrenn-verlust |
|---|---|---|---|---|---|---|---|
| 1 | 45 | AS | >300 | 200 | 140 | 170 | 2,7% |
| 2 | 40 | AS | 280 | 200 | 160 | 180 | 3,2% |
| 3 | 35 | AS | >300 | 200 | 160 | 180 | 4,1% |
| 4 | 35 | ES | >300 | 200 | 140 | 180 | 1,9% |
| 5 | 40 | ES | 250 | 180 | 160 | 140 | 2,2% |

Tabelle 3 (Fortsetzung)

| Beispiel | Neutralisation (1) | (2) | Beschichtung (3) | (4) | Einbrenn-temp. °C (5) | Härte (6) | Einbrenn-verlust |
|---|---|---|---|---|---|---|---|
| 6 | 35 | AS | 280 | 200 | 160 | 170 | 2,8% |
| 7 | 45 | AS | 270 | 180 | 140 | 150 | 2,4% |
| 8 | 40 | ES | 210 | 150 | 180 | 200 | 5,3% |
| 9 | 40 | AS | 260 | 180 | 180 | 200 | 6,9% |
| 10 | 45 | AS | 220 | 150 | 140 | 180 | 3,3% |
| 11 | 40 | ES | >300 | 200 | 160 | 180 | 3,8% |
| 12 | 40 | ES | >300 | 200 | 160 | 170 | 4,1% |
| 13 | 35 | AS | 270 | 200 | 160 | 170 | 4,3% |

Erklärungen zu Tabelle 3
(1) in mMol pro 100 g Festharz
(2) Art der Säure
(3) Aufbruchsspannung (Volt)
(4) Abscheidespannung (Volt)
(5) Einbrennzeit 30 Minuten
(6) in Sekunden gemäss DIN 53 157

Beispiele 14–25

Die in Tab. 4 angegebenen Komponenten werden in EGL bis zu einem Festkörpergehalt von 65% verdünnt und auf 75–80°C erwärmt, bis eine Säurezahl von weniger als 5 mg KOH/g erreicht ist. Bei Einsatz von gemischten Halbestern ergeben sich die gleichen Resultate wie bei getrennter Herstellung derselben.

Die Herstellung der gemischten Halbester erfolgt in der Weise, dass man Hydroxyalkyloxazolidin, Hydroxyalkyl(meth)acrylat und Dicarbonsäureanhydrid, eventuell unter Zusatz von inerten Lösungsmitteln wie Estern, Ketonen, oder Aromaten, auf 70–80°C erhitzt, bis die Säurezahl konstant ist.

Tabelle 4

| | EPH (g) | OHE (g) | AMIN (g) | MCS (g) | DBZ | AZ | NEUTR | pH | Vmax |
|---|---|---|---|---|---|---|---|---|---|
| 14 | 650 III<br>1000 II | 807 A 5 | 66 DEAPA | 451 S 3 | 0,54 | 75,3 | 35 ES | 7,0 | 300 |
| 15 | 250 II<br>1300 III | 742 A4a | 80 DEAPA<br>73 DEA | 667 S 5<br>168 S 6 | 0,73 | 80 | 25 AS | 7,0 | 300 |
| 16 | 500 II<br>650 III | 498 A 6 | 66 DEAPA<br>39 DBA | 451 S 3 | 0,73 | 76,2 | 30 AS | 6,1 | 300 |
| 17 | 1300 III | 891 A4a | 51 DMAPA<br>73 DEA | 620 S 3 | 0,75 | 95,4 | 35 AS | 7,0 | 300 |
| 18 | 650 III<br>1000 II | 891 A4a | 93 DEAPA<br>88 DEA | - - | - | 115 | 35 AS | 7,6 | 250 |
| 19 | 650 III<br>1000 II | 1040 A4a | 36 BA<br>58 DEA | 224 S 6 | - | 98,7 | 70 ES | 6,3 | 100 |
| 20 | 1300 III | 942 A 5 | 66 DEAPA<br>36 DEA | 508 S 3<br>112 S 6 | 0,61 | 95 | 35 AS | 6,8 | 240 |

Tabelle 4 (Fortsetzung)

| | EPH (g) | OHE (g) | AMIN (g) | MCS (g) | DBZ | AZ | NEUTR | pH | Vmax |
|---|---|---|---|---|---|---|---|---|---|
| 21 | 200 I<br>500 II<br>325 III | 968 A 5 | 26 DBA | – – | – | 105 | 30 AS | 5,9 | 200 |
| 22 | 500 II<br>1300 III | 1277 A4a | 31 DMAPA<br>15 DEA | 560 S 4<br>72 S 2 | 0,83 | 76 | 20 ES | 6,1 | 250 |
| 23 | 500 II<br>650 III | 624 A4a | 36 DEA | 377 S 3<br>168 S 1 | 0,59 | 62 | 45 AS | 6,2 | 150 |
| 24 | 325 III<br>500 II | 416 A4a | 40 DEAPA<br>39 DBA | 141 S 3 | 0,34 | 88 | 30 AS | 7,1 | 280 |
| 25 | 165 III<br>1000 II | 356 A4a | 26 DBA | 423 S 3 | 0,76 | 40 | 25 AS | 5,9 | 250 |

Die Prüfung der gemäss Tabelle 4 erhaltenen Produkte erfolgte analog wie bei den Beispielen 1–13. Bei der Prüfung der Wasserfestigkeit (Wasserlagerung bei 40°C) zeigen die Beschichtungen nach 380 Stunden Testzeit keine optisch sichtbaren Veränderungen durch Rostangriff oder Bläschenbildung. Beim Salzsprühtest gemäss ASTM-B117-64 zeigen alle Beschichtungen nach einer Testzeit von 340 Stunden einen Kreuzschnittangriff von weniger als 2 mm (Abreissmethode).

Beispiele 26–36

Die in Tabelle 5 angegebenen Komponenten werden mit AEGL bis zu einem Festkörpergehalt von 65% verdünnt und auf 75–80°C erwärmt, bis eine Säurezahl von weniger als 5 mg KOH/g erreicht ist. Bei Einsatz von gemischten Halbestern ergeben sich die gleichen Resultate wie bei getrennter Herstellung derselben. Die Herstellung der gemischten Halbester erfolgt in der Weise, dass man Hydroxyalkyloxazolidin, Hydroxyalkyl(meth)acrylat, tertiären Aminoalkohol und Dicarbonsäureanhydrid, eventuell unter Zusatz von inerten Lösungsmitteln wie Estern, Ketonen oder Aromaten, auf 70–80°C erhitzt, bis die Säurezahl konstant ist.

Tabelle 5

| | EPH (g) | OHE (g) | BHE (g) | MCS (g) | DCS (g) | DBZ | AZ | NEUTR | pH | Vmax Volt |
|---|---|---|---|---|---|---|---|---|---|---|
| 26 | 1000 II<br>650 III | 484 A 5 | 161 S 7 | 43 S 2<br>322 S 4 | 103 S 9 | 0,65 | 49 | 25 AS | 6,8 | 240 |
| 27 | 200 I<br>650 III | 538 A 5 | 54 S 7 | 106 S 5 | 146 S 9 | 0,24 | 73 | 30 AS | 6,5 | 300 |
| 28 | 1300 III | 879 A 6 | 195 S 8 | 72 S 2<br>168 S 5 | 118 S 11 | 0,59 | 74 | 30 ES | 6,9 | 280 |
| 29 | 650 III<br>400 I<br>500 II | 1040 A4a | 135 S 7 | 72 S 2<br>268 S 4 | 50 S 10 | 0,64 | 72 | 35 AS | 6,5 | 250 |
| 30 | 1300 III<br>500 II | 1319 A 6 | 538 S 7 | 94 S 2 | 29 S 9 | 0,34 | 96 | 45 ES | 6,4 | 300 |
| 31 | 400 I<br>1000 II | 807 A 6 | 81 S 7 | 22 S 2 | 33 S 11 | 0,13 | 72 | 30 ES | 6,4 | 200 |

Tabelle 5 (Fortsetzung)

| | EPH (g) | OHE (g) | BHE (g) | MCS (g) | DCS (g) | DBZ | AZ | NEUTR | pH | Vmax Volt |
|---|---|---|---|---|---|---|---|---|---|---|
| 32 | 1300 III<br>1000 II<br>200 I | 1960 A4a | 325 S 8 | 451 S 3 | 59 S 11 | 0,3 | 80 | 35 AS | 6,6 | 250 |
| 33 | 1000 II<br>650 III | 1211 A 5 | 296 S 7 | - | - | - | 99 | 35 AS | 6,7 | 200 |
| 34 | 800 I<br>1000 II | 672 A 5 | 134 S 7 | 72 S 2<br>268 S 4<br>280 S 6 | - | 0,62 | 52 | 35 ES | 6,4 | 230 |
| 35 | 400 I<br>650 III | 1157 A 5 | 65 S 8 | - | 80 S 9 | - | 107 | 25 ES | 6,5 | 280 |
| 36 | 1300 III | 1188 A4a | 377 S 7 | - | 131 S 9 | - | 101 | 35 ES | 6,4 | 260 |

Die Prüfung der gemäss Tabelle 5 erhaltenen Produkte erfolgt analog wie bei den Beispielen 1–13. Bei der Prüfung der Wasserfestigkeit (Wasserlagerung bei 40°C) zeigen die Beschichtungen nach 380 Stunden Testzeit keine optisch sichtbaren Veränderungen durch Rostangriff oder Bläschenbildung.

Beim Salzsprühtest gemäss ASTM-B117-64 zeigen alle Beschichtungen nach einer Testzeit von 340 Stunden einen Kreuzschnittangriff von weniger als 2 mm (Abreissmethode).

**Patentansprüche**

1. Verfahren zur Herstellung von nach vollständiger oder partieller Neutralisation mit anorganischen und/oder organischen Säuren wasserverdünnbaren Bindemitteln durch Umsetzung von Epoxidharzen mit Reaktionsprodukten aus tertiären Hydroxyaminen mit Dicarbonsäuren, dadurch gekennzeichnet, dass man die Epoxidgruppen einer harzartigen Verbindung mit mindestens zwei 1,2-Epoxidgruppen pro Molekül und einem Epoxidäquivalent von mind. 160 mit einem Halbester aus einer aliphatischen, cycloaliphatischen oder aromatischen Dicarbonsäure und einem N-2-Hydroxyalkyloxazolidin, welcher die allgemeine Formel

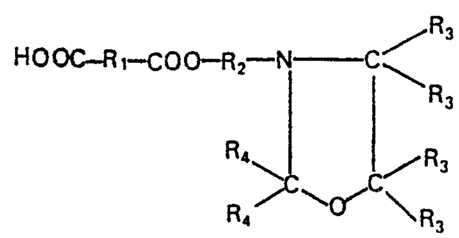

aufweist und
wobei $R_1$ einen gesättigten oder ungesättigten, aliphatischen, cycloaliphatischen oder aromatischen Kohlenwasserstoffrest
$R_2$ einen geradkettigen oder verzweigten Alkylenrest
$R_3$ ein Wasserstoffatom oder einen Alkylrest und
$R_4$ ein Wasserstoffatom oder einen Alkylrest mit bis zu 6 C-Atomen bedeutet,
gegebenenfalls zusammen mit weiteren Verbindungen zur Einführung zusätzlicher Vernetzungsfunktionen und/oder anderen den Filmaufbau und/oder die Filmoberfläche beeinflussenden Funktionen in Gegenwart inerter Lösungsmittel bei 60 bis 80°C vollständig umsetzt, wobei die Menge des Oxazolidinhalbesters so gewählt wird, dass das epoxidgruppenfreie Endprodukt eine theoretische Aminzahl von mindestens 35, vorzugsweise 50 bis 140 mg KOH/g aufweist.

2. Verfahren nach Anspruch 1, dadurch gekennzeichnet, dass als N-2-Hydroxyalkyloxazolidin ein aus Diäthanolamin oder Diisopropanolamin und Formaldehyd hergestelltes Reaktionsprodukt eingesetzt wird.

3. Verfahren nach den Ansprüchen 1 und 2, dadurch gekennzeichnet, dass die Epoxidgruppen neben dem Oxazolidinhalbester anteilig mit gesättigten und/oder ungesättigten Carbonsäuren umgesetzt werden.

4. Verfahren nach den Ansprüchen 1 bis 3, dadurch gekennzeichnet, dass man 30 bis 99,5 Mol-% der Epoxidgruppen mit dem Oxazolidinhalbester, 0,5 bis 70 Mol-% mit einem primären und/oder sekundären Amin und den gegebenenfalls verbleibenden Rest der Epoxidgruppen mit gesättigten und/oder ungesättigten Carbonsäuren umsetzt.

5. Verfahren nach Anspruch 4, dadurch gekennzeichnet, dass man 40 bis 60 Mol-% der Epoxidgruppen mit dem Oxazolidinhalbester, 5 bis 35 Mol-% mit einem primären und/oder sekundären Amin und den verbleibenden Rest der Epoxidgruppen mit gesättigten und/oder ungesättigten Carbonsäuren umsetzt.

6. Verfahren nach den Ansprüchen 4 und 5, dadurch gekennzeichnet, dass man als primäre Amine solche einsetzt, welche noch über eine weitere tertiäre Aminfunktion verfügen.

7. Verfahren nach den Ansprüchen 4 und 5,

dadurch gekennzeichnet, dass man primäre Monoamine zusammen mit sekundären Monoaminen einsetzt.

8. Verfahren nach den Ansprüchen 4 bis 7, dadurch gekennzeichnet, dass die Umsetzung der Epoxidverbindung mit dem Oxazolidinhalbester, der Carbonsäure und der Aminkomponente gleichzeitig erfolgt oder die Reaktion mit dem Amin anschliessend erfolgt.

9. Verfahren nach den Ansprüchen 4 bis 8, dadurch gekennzeichnet, dass man die Epoxidgruppen mit einem gemeinsam hergestellten Halbesterzwischenprodukt aus einer Dicarbonsäure, einem N-2-Hydroxyalkyloxazolidin und einem Hydroxyalkyl(meth)acrylat und dem Amin umsetzt.

10. Verfahren nach den Ansprüchen 1 und 2, dadurch gekennzeichnet, dass man 30 bis 99 Mol-% der Epoxidgruppen mit einem Oxazolidinhalbester, 1 bis 30 Mol-% mit einem Halbester aus einer Dicarbonsäure und einem tertiären Aminoalkohol und den gegebenenfalls verbleibenden Rest der Epoxidgruppen mit gesättigten und/oder ungesättigten Mono- und/oder Dicarbonsäuren umsetzt.

11. Verfahren nach Anspruch 10, dadurch gekennzeichnet, dass man 40 bis 70 Mol-% der Epoxidgruppen mit einem Oxazolidinhalbester, 5 bis 15 Mol-% mit einem Halbester aus einer Dicarbonsäure und einem tertiären Aminoalkohol und den verbleibenden Rest der Epoxidgruppen mit gesättigten und/oder ungesättigten Mono- und/oder Dicarbonsäuren umsetzt.

12. Verfahren nach den Ansprüchen 10 und 11, dadurch gekennzeichnet, dass man als Veresterungskomponenten für die Epoxidgruppen eine Kombination von Oxazolidinhalbestern, Halbestern aus Dicarbonsäuren und tertiären Aminoalkoholen, aliphatischen, cycloaliphatischen oder aromatischen Dicarbonsäuren und gegebenenfalls Monocarbonsäuren einsetzt.

13. Verwendung der nach Anspruch 1 bis 12 erhaltenen Bindemittel in kathodisch abscheidbaren Überzugsmitteln.

14. Überzugsmittel enthaltend die gemäss Ansprüchen 1 bis 12 hergestellten Bindemittel in Kombination mit Pigmenten, Füllstoffen, Hilfslösungsmittel und den üblichen Lackhilfsmitteln.

**Claims:**

1. Process for producing binders water dilutable upon total or partial neutralisation with inorganic and/or organic acids, through reaction of epoxy resins with reaction products of tertiary hydroxy amines and dicarboxylic acids, characterised in that the epoxy groups of a resin-like compound carrying at least two 1,2-epoxy groups per molecule and having an epoxy equivalent of at least 160, and a semiester of an aliphatic, cycloaliphatic or aromatic dicarboxylic acid with an N-2-hydroxyalkyl oxazolidine of the general formula

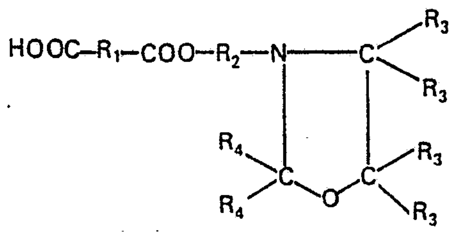

wherein

$R_1$ is a saturated or unsaturated aliphatic, cycloaliphatic or aromatic hydrocarbon radical

$R_2$ is a straight chain or branched alkylene radical

$R_3$ is a hydrogen atom or an alkyl radical and

$R_4$ is a hydrogen atom or an alkyl radical with up to 6 C-atoms,

optionally together with other compounds to introduce additional crosslinking functions and/or other functions influencing film structure and/or film surface, are reacted completely at from 60–80°C, in the presence of inert solvents, the quantity of the oxazolidine semiester being chosen such that the epoxy group free final product has a theoretical amine value of at least 35, preferably of from 50 to 140 mg KOH/g.

2. Process according to claim 1, characterised in that a reaction product of diethanol amine or diisopropanolamine is used as N-2-hydroxyalkyl oxazolidine.

3. Process according to claims 1 and 2, characterised in that the epoxy groups are reacted, besides with the oxazolidine semiester, in portions, with saturated and/or unsaturated carboxylic acids.

4. Process according to claims 1 to 3, characterised in that 30 to 99.5 mole-% of the epoxy groups are reacted with the oxazolidine semiester, 0.5 to 70 mole-% are reacted with a primary and/or secondary amine and the optionally remaining rest of the epoxy groups is reacted with saturated and/or unsaturated carboxylic acids.

5. Process according to claim 4, characterised in that 40 to 60 mole-% of the epoxy groups are reacted with the oxazolidine semiester, 5 to 35 mole-% are reacted with a primary and/or secondary amine and the remaining rest of the epoxy groups is reacted with saturated and/or unsaturated carboxylic acids.

6. Process according to claims 4 and 5, characterised in that such primary amines are used which also carry a tertiary amine function.

7. Process according to claims 4 and 5, characterised in that primary monoamines are used together with secondary monoamines.

8. Process according to claims 4 to 7, characterised in that the reaction of the epoxy compound, the oxazolidine semiester, the carboxylic acid and the amine component is carried out simultaneously, or that the reaction with the amine is carried out subsequently.

9. Process according to claims 4 to 8, characterised in that the epoxy groups are reacted with a semiester intermediate jointly produced of a dicarboxylic acid, an N-2-hydroxyalkyloxazolidine and a hydroxyalkyl(meth)acrylate, and with the amine.

10. Process according to claims 1 and 2, characterised in that 30 to 99 mole-% of the epoxy groups are reacted with an oxazolidine semiester, 1 to 30 mole-% are reacted with a semiester of a dicarboxylic acid and a tertiary amine alcohol and the optionally remaining rest of the epoxy groups is reacted with saturated and/or unsaturated mono- and/or dicarboxylic acids.

11. Process according to claim 10, characterised in that 4 to 70 mole-% of the epoxy groups are reacted with an oxazolidine semiester, 5 to 15 mole-% are reacted with a semiester of a dicarboxylic acid and a tertiary amine alcohol and the remaining rest is reacted with saturated and/or unsaturated mono- and/or dicarboxylic acids.

12. Process according to claims 10 and 11, characterised in that as esterifying components for the epoxy groups a combination is used of oxazolidine semiesters, semiesters of dicarboxylic acids with tertiary amine alcohols, aliphatic, cycloaliphatic or aromatic dicarboxylic acids and optionally monocarboxylic acids.

13. Use of the binders obtained according to claims 1 to 12 in coating compositions for cathodic electrodeposition.

14. Coating compositions containing the binders produced according to claims 1 to 12 in combination with pigments, extenders, auxiliary solvents and normal paint additives.

**Revendications**

1. Procédé de préparation de liants diluables à l'eau après neutralisation complète ou partielle avec des acides minéraux et/ou organiques par réaction de résines époxyde avec des produits de réaction d'hydroxyamines tertiaires avec des acides dicarboxyliques, caractérisé en ce qu'on fait réagir complètement les groupes époxyde d'un composé de type résine ayant au moins deux groupes 1,2-époxyde par molécule et un équivalent d'époxyde d'au moins 160, avec un hémiester d'un acide dicarboxylique aliphatique, cycloaliphatique ou aromatique et d'une N-2-hydroxyalcoyloxazolidine présentant la formule générale

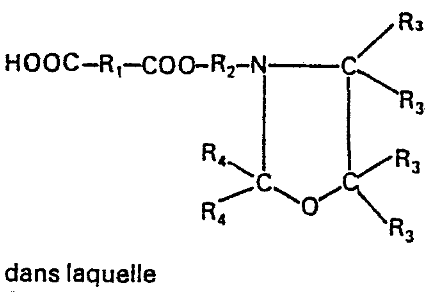

dans laquelle

$R_1$ désigne un radical hydrocarboné saturé ou insaturé, aliphatique, cycloaliphatique ou aromatique,

$R_2$ désigne un radical alcoylène linéaire ou ramifié,

$R_3$ désigne un atome d'hydrogène ou un radical alcoyle,

$R_4$ désigne un atome d'hydrogène ou un radical alcoyle ayant jusqu'à 6 atomes de C, le cas échéant avec d'autres composés pour l'introduction de fonctions de réticulation supplémentaires et/ou d'autres fonctions influant sur la structure de la pellicule et/ou sur la surface de la pellicule, en présence de solvants inertes, à 60 à 80°C, la quantité de l'hémiester d'oxazolidine étant choisie de telle sorte que le produit final exempt de groupes époxyde présente un indice d'amine d'au moins 35, de préférence de 50 à 140 mg de KOH/g.

2. Procédé suivant la revendication 1, caractérisé en ce qu'on utilise comme N-2-hydroxyalcoyloxazolidine un produit de réaction préparé à partir de diéthanolamine ou de diisopropanolamine et de formaldéhyde.

3. Procédé suivant l'une quelconque des revendications 1 et 2, caractérisé en ce qu'on fait réagir partiellement les groupes époxyde, à côté de l'hémiester d'oxazolidine, avec des acides carboxyliques saturés et/ou insaturés.

4. Procédé suivant l'une quelconque des revendications 1 à 3, caractérisé en ce qu'on fait réagir 30 à 99,5 mole % des groupes époxyde avec l'hémiester d'oxazolidine, 0,5 à 70 mole % avec une amine primaire et/ou secondaire et les groupes époxyde éventuellement restants avec des acides carboxyliques saturés et/ou insaturés.

5. Procédé suivant la revendication 4, caractérisé en ce qu'on fait réagir 40 à 60 mole % des groupes époxyde avec l'hémiester d'oxazolidine, 5 à 35 mole % avec une amine primaire et/ou secondaire, et le reste des groupes époxyde avec des acides carboxyliques saturés et/ou insaturés.

6. Procédé suivant l'une quelconque des revendications 4 et 5, caractérisé en ce qu'on utilise comme amines primaires des amines qui disposent encore d'une autre fonction amine tertiaire.

7. Procédé suivant l'une quelconque des revendications 4 et 5, caractérisé en ce qu'on utilise des monoamines primaires en même temps que des monoamines secondaires.

8. Procédé suivant l'une quelconque des revendications 4 à 7, caractérisé en ce que la réaction du composé époxydique avec l'hémiester d'oxazolidine, l'acide carboxylique et le constituant amine s'effectuent simultanément, ou en ce que la réaction avec l'amine s'effectue ensuite.

9. Procédé suivant l'une quelconque des revendications 4 à 8, caractérisé en ce qu'on fait réagir les groupes époxyde avec un produit intermédiaire hémiester préparé en commun à partir d'un acide dicarboxylique, d'une N-2-hydroxyalcoyloxazolidine et d'un (méth)acrylate d'hydroxyalcoyle et de l'amine.

10. Procédé suivant l'une quelconque des revendications 1 et 2, caractérisé en ce qu'on fait réagir 30 à 99 mole % des groupes époxyde avec un hémiester d'oxazolidine, 1 à 30 mole % avec un hémiester d'un acide dicarboxylique et d'un aminoalcool tertiaire et les groupes époxyde éventuellement restants avec des acides mono – et/ou dicarboxyliques saturés et/ou insaturés.

11. Procédé suivant la revendication 10, caractérisé en ce qu'on fait réagir 40 à 70 mole % des

groupes époxyde avec un hémiester d'oxazolidine, 5 à 15 mole % avec un hémiester d'un acide dicarboxylique et d'un aminoalcool tertiaire et le reste des groupes époxyde avec des acides mono- et/ou dicarboxyliques saturés et/ou insaturés.

12. Procédé suivant l'une quelconque des revendications 10 et 11, caractérisé en ce qu'on utilise comme constituants d'estérification pour les groupes époxyde une combinaison d'hémiesters d'oxazolidine, d'hémiesters d'acides dicarboxyliques et d'aminoalcools tertiaires, d'acides dicarboxyliques cycloaliphatiques, aliphatiques ou aromatiques et le cas échéant d'acides monocarboxyliques.

13. Utilisation des liants obtenus suivant les revendications 1 à 12 dans des masses de revêtement déposables par cataphorèse.

14. Masses de revêtement contenant les liants préparés conformément aux revendications 1 à 12 en combinaison avec des pigments, des charges, des solvants auxiliaires et les auxiliaires pour peintures habituels.